# EUROPÄISCHE PATENTSCHRIFT

(11) **EP 0 853 754 B1**
(45) Veröffentlichungstag und Bekanntmachung des Hinweises auf die Patenterteilung: **09.07.2003**
(21) Anmeldenummer: 96928426.4
(22) Anmeldetag: 07.08.1996
(51) Int. Cl.: G01F 23/14, E21B 47/04

(54) **VERFAHREN UND MESSGERÄT ZUM MESSEN DES HYDROSTATISCHEN DRUCKS, INSBESONDERE DES GRUNDWASSERS**
METHOD AND MEASURING DEVICE FOR MEASURING HYDROSTATIC PRESSURE, IN PARTICULAR THAT OF GROUND WATER
PROCEDE ET DISPOSITIF DE MESURE DE LA PRESSION HYDROSTATIQUE, EN PARTICULIER DE CELLE DES EAUX SOUTERRAINES

(30) Priorität: 05.10.1995 DE 19537149
(43) Veröffentlichungstag der Anmeldung: 22.07.1998
(73) Patentinhaber: OTT MESSTECHNIK GmbH & CO. KG, 87437 Kempten (DE)
(72) Erfinder: MAINKA, Jürgen, D-87487 Wiggensbach (DE); FEND, Peter, D-87490 Haldenwang (DE); SCHICK, Franz, D-87700 Memmingem (DE); FELDER, Anton, D-87435 Kempten (DE); BAUR, Heinrich, D-86424 Altusried (DE)
(74) Vertreter: Kloiber, Thomas
(86) Internationale Anmeldenummer: EP9603498
(87) Internationale Veröffentlichungsnummer: WO97013124

(56) Entgegenhaltungen:
- DD-A- 250 574
- DE-A- 2 248 315
- GB-A- 195 078
- US-A- 4 006 636

## Beschreibung

Die Erfindung betrifft ein Verfahren zum Messen des hydrostatischen Drucks, insbesondere des Grundwassers.

Die Erfindung hat auch ein Grundwassermeßgerät mit Datensammler, Meßwertaufnehmer sowie eine Wirkverbindung zwischen Meßwertaufnehmer und Datensammler zum Gegenstand.

In der hydrologischen Meßpraxis ist die kontinuierliche Erfassung des Wasserstandes von großer Wichtigkeit, da er für die Lösung der von zivilisatorischen Entwicklungen verursachten Umweltprobleme benötigt wird.

Wasser liegt in der Natur als Oberflächenwasser sowie Grundwasser vor. Zu der Kategorie Oberflächenwasser zählen Flüsse, Bäche, Seen sowie Meere. In der Regel ist der Oberflächenwasserspiegel frei zugänglich, so daß die Installation der Geräte für die Erfassung und Registrierung der Wasserstände relativ einfach ist.

Für die Beobachtung der Grundwasserleiter müssen dagegen erst Bohrlöcher gebohrt werden, die in der Regel mit 2" bis 6" Rohren ausgebaut sind. Zum Schutz gegen Unbefugte sind die Rohre mit einer Rohrverschlußkappe versehen.

Aufgrund der örtlichen Randbedingungen und Vorgaben von Meßnetzbetreibern sind die Anforderungen an ein Grundwasser-Meßsystem sehr hoch. Nachfolgend sind einige dieser Forderungen aufgeführt.
- Einbau vollständig in 2" bis 6" Rohre
- Betriebstemperatur -20°C bis ± 60°C
- Kondenswasserresistenz
- Langzeitstabile Meßgenauigkeit von + 1 cm auf 10 m Meßbereich
- Autarke Stromversorgung über mindestens 1 Jahr
- Geringe Anschaffungskosten
- Geringe Betriebskosten

Für die Wasserstandsmessung stehen heute eine Vielzahl von Meßsystemen zur Verfügung. Aufgrund der zuvor genannten Gesamtanforderungen sind jedoch nicht alle Meßverfahren für die Grundwassermessung in Verbindung mit elektronischen Datensammlern geeignet.

Die bisher bekannten Meßverfahren lassen sich im wesentlichen in zwei Kategorien einordnen, die Längenmessung oder die Druckmessung. Zur Längenmessung zählen alle mit Schwimmer mit Winkelcodierer betriebenen Meßsysteme, akustische und optische Verfahren sowie Messung durch Leitwertpegel. Zur Druckmessung gehören alle Systeme wie pneumatische Druckmessung (Lufteinperlverfahren) und elektronische Druckmessung (piëzoresistive, kapazitive etc.).

Im Bereich der Grundwassermessung haben sich bisher nur die Längenmessung durch Schwimmer mit Winkelcodierer und die elektronische Druckmessung als praxistauglich erwiesen. Eine aktuelle Übersicht über den Einsatz von Grundwassermeßsystemen beinhaltet die DVWK-Schrift, Heft 107: Grundwassermeßgeräte, Bonn, 1994.

Ausgehend von einem Verfahren zum Messen des hydrostatischen Drucks, insbesondere des Grundwassers, der eingangs genannten Art liegt der Erfindung die Aufgabe zugrunde, ein solches Verfahren verglichen mit dem Stand der Technik in einem Raum mit extrem kleinem Durchmesser, dazu kondenswasserresistent, enorm energiesparend und dabei autark und mit geringst möglichem Meßaufwand durchzuführen.

Das oben genanne Grundwassermeßgerät -soll einerseits mit geringstmöglichem Durchmesser unabhängig von systemfremder Energiequelle, kondenswasserresistent und energiesparend ausgebildet und in einem Rohr kleinem Durchmessers, beispielsweise von 2 Zoll, frostfrei unterbringbar sein.

Erreicht wird dies bei einem solchen Verfahren überraschend dadurch, daß Luft in das Grundwasser eingeperlt wird und der Meßleitungsdruck auf eine Absolutdruckzelle gegeben und dann der Atmosphärendruck auf die gleiche Meßzelle aufgebracht wird, wobei zur Messung des hydrostatischen Drucks des Grundwassers die Luft in das Grundwasser eingeperlt wird und eine Messleitung mit kleinem Durchmesser gegen eine große Querschnittsfläche eines Ausperltopfs ausbläst, wobei das Verhältnis des Querschnitts des Ausperltopfes zum Querschnitt der Messleitung größer als 400 ist.

Bei einem Grundwassermeßgerät der oben genannten Art mit Datensammler, Meßwertaufnehmer sowie einer Wirkverbindung zwischen Meßwertaufnehmer und Datensammler wird dies erreicht durch eine durch einen Motor angetriebene Kolbenpumpe für das Einperlen von Luft mit einem damit verbundenen Ventil zum Öffnen und Schließen der Messleitung sowie zur gleichzeitigen Steuerung des Messleitungsdrucks im Verhältnis zum Atmosphärendruck, wobei eine Absolutdruckzelle durch Betätigung der Kolbenpumpe bei offenem Ventil den Druck eines Grundwassermessgeräts misst und bei geschlossenem Ventil den Atmosphärendruck misst.

Es wird nicht verkannt, daß für die Wasserstandsmessung in Oberflächengewässern mit großem Erfolg das Lufteinperlverfahren angewandt wird. Hierbei befindet sich unterhalb des niedrigst zu messenden Wasserstandes die Austrittsöffnung eines Luftschlauches. Durch eine stetige Luftzufuhr (Druckminderer, Mengenregler) wird erreicht, daß an der Austrittsöffnung des Luftschlauches Luftblasen ausperlen. Auf diese Weise ist der Druck der Luft an der Austrittsöffnung des Luftschlauches gleich dem Druck der Flüssigkeit an dieser Stelle. Ober die Dichte p des Wassers ergibt sich ein linearer Zusammenhang zwischen dem gesuchten Wasserstand und dem Druck der Luft im Schlauch. Der Druck der Luft im Meßschlauch wird außerhalb des Wassers mit einem Kompensationsverfahren (Federbalg, Laufgewicht) oder einer Referenzdruckmeßzelle gemessen. Die Registrierung des Wasserstandes erfolgt auf einer mechanischen Schreibeinrichtung oder einem Datensammler. Eine Beschreibung dieser Meßsysteme ist zu finden in dem Firmenprospekt von Ott Meßtechnik GmbH & Co.
KG, Ludwigstr. 16, 87437 Kempten, Kompakt Pneumatikpegel R25, 20.502.000.P.D.

Desweiteren sind Einperlmeßsysteme bekannt durch die Patentschriften DL-PS 7733 - IPC G 01 c, P 22 48 315.4-52 und WP G 01 F / 198 683. Keines dieser Einperlmeßsysteme ist jedoch in ein 2" Pegelrohr vollständig einbaubar sowie ein Jahr lang über eine autarke Stromversorgung (6V, 1,5Ah) betreibbar. Weitere Unterscheidungsmerkmale sind, daß sie alle eine kontinuierliche Luftzufuhr benötigen, somit also Luftvolumen in einem Reservetank bereithalten müssen, was erheblichen Platz- und/oder Energieaufwand bedeutet.

Wegen des erheblichen apparativen Aufwandes an der Oberfläche war bisher an die Anwendung des Lufteinperlverfahrens bei der Grundwassermeßtechnik nicht zu denken, auch darum, weil der Fachmann bisher eine laufende Energiezufuhr von außen kontinuierlich über längere Zeiträume für notwendig erachtete.

Durch die Kombination mit systemeigenem Kompressor (Kolbenpumpe) verbunden mit der Ausbildung der Meßzelle als Absolutdruckzelle konnte die oben genannte Aufgabe überraschend gelöst werden.

Besonders zweckmäßig ist wegen der geringen zur Verfügung stehenden Energie die nicht kontinuierliche Luftzufuhr, etwa alle Viertelstunden.

Eine ganz besonders zweckmäßige Ausführungsform ist die kleindurchmessrige Meßleitung, die gegen ein, verglichen mit dem der Meßleitung großes Volumen ausbläst.

Apparatemäßig kann der Durchmesser des Ausperltopfes beispielsweise 20 mal größer als der Durchmesser der Meßleitung sein. Hierdurch kann der Meßfehler bei steigendem Wasserstand sehr klein gehalten werden. Das Prinzip beruht auf einem einfachen physikalischen Gesetz nach Boyle-Mariotte, nämlich: "das Produkt aus Druck und Volumen ist bei einem eingeschlossenen Gas gleichbleibender Temperatur konstant." Die eingesetzte Kolbenpumpe ist frei von jedem Pleuel. Die Kolbenstange führt lediglich eine gerade Bewegung aus. Der Kolben verfügt über einen Stößel, der in einer bestimmten Stellung, der Maximaldruckstellung, plötzlich ein Ventil öffnet. Durch den plötzlichen Druckabfall wird einmal die Meßleitung und der Ausperltopf schnell von etwa verbleibendem Wasser gereinigt. Zum anderen werden auch etwaige Kondensatrückstände und evtl. vorhandene Algen an den Ausperllöchern fortgeblasen.

Zweckmäßig wird die Druckabfallflanke zur Umsteuerung des Motors, etwa eines Gleichstrommotors, in entgegengesetzter Richtung benutzt.

Als besonders zweckmäßig haben sich Kegelventile herausgestellt. Der Stößel kann aber auch etwa eine Platte von ihrem Ventilsitz plötzlich fortdrücken. Die Gegendruckfeder ist so ausgebildet, daß sie nur im Hook'schen Bereich zur Wirkung kommt. Sie ist tariert und wird etwa bei einem Druck von 2 bar, bei dem der Stößel des Kolbens auf das Ventil trifft, überwunden.

Datensammler, Kolbenpumpe, Absolutdruckzelle, optische Schnittstelle können zusammen mit der Stromversorgung (Batterie) in ein Zweizollpegelrohr eingeschoben und unter der Brunnenkappe im frostsicheren Bereich abgehängt werden. Das ganze ist somit frostsicher untergebracht. Dies hat den großen Vorteil, daß Extremtemperaturen keine Beeinflussung des Meßsystems (bestehend aus Elektronik und Mechanik) verursachen.

Um Strom zu sparen, wird im Gegensatz zu den bekannten Geräten keine kontinuierliche Luftzufuhr stattfinden. Da jedoch bei steigendem Wasserspiegel (zwischen den Messungen) die Luft im Ausperltopf und in der Meßleitung komprimiert wird, verschiebt sich die Grenze zwischen Wasser und Luft. Dies bedeutet, daß bei steigendem Wasserstand Wasser in den Ausperltopf eindringt. Der gemessene Druck bezieht sich somit nicht mehr auf die Ausperllöcher sondern auf die Höhe des Wasserspiegels im Ausperltopf.

Bei den bekannten Geräten wird durch genügend hohe Luftzufuhr kontinuierlich diese Fehlerquelle beseitigt. Um die erforderliche Luftmenge nachführen zu können, ist jedoch der Stromverbrauch dieser Geräte zu hoch, um die oben genannte Aufgabe erfüllen zu können, die jedoch durch die erfindungsgemäßen Volumen- bzw. Durchmesserverhältnisse als überraschend gelöst gilt.

Schließlich richtet sich die Erfindung noch auf die Anwendung der für die Oberflächenwassermessung bekannten Lufteinperlung auf die Grundwassermessung, wobei der bekannte Kompressor durch eine pleuellose Kolbenpumpe mit am Kolben angebrachtem Stößel zur Ventilbetätigung ersetzt und der Druck über eine Absolutdruckquelle gemessen wird.

Durch die Maßnahmen nach der Erfindung wird bei einer erfindungsgemäßen Messung des hydrostatischen Wasserdrucks in Grundwasserpegelrohren erreicht, daß
das Lufteinperlprinzip angewendet werden kann,
in ein Zweizollpegelrohr eingebaut werden kann,
ein Arbeiten bei Außentemperaturen von -20°C bis + 60°C zuverlässig gewährleistet wird,
Kondenswasserresistenz erwartet werde kann,
eine langzeitstabile Meßgenauigkeit von +/- 1 cm auf 10 m Meßbereich gewährleistet wird,
eine autarke Stromversorgung über mindestens 1 Jahr, was bei bekannten Systemen undenkbar war, zur Verfügung gestellt wird,
der Anschaffungspreis des Gerätes gegenüber dem bekannter Systeme bis zu 50 % unterschritten wird und
die Betriebskosten gering sind.

Über ein einfaches Hiev- und Absenkkabel kann die Mechanik und Elektronik leicht hochgezogen werden. Durch die weiter unten beschriebene Anbringung des Ausperltopfes braucht dieser dabei von seinem Ort nicht entfernt zu werden.

In unten zu beschreibender Weise wird selbst bei einer Nullpunktsdrift der Absolutdruckmeßzelle die Meßgenauigkeit nicht beeinträchtigt.

Durch die Maßnahmen nach der Erfindung wird es möglich, einen Deckel mit Verschluß aufzusetzen, der einmal abschließbar ist, andererseits in Städten ohne Gefahr einer Kontaminierung, beispielsweise durch Ölunfälle eingesetzt werden kann.

Eine beispielsweise Ausführungsform der Erfindung soll nun mit bezug auf die beiliegenden Zeichnungen näher erläutert werden, in denen
**Figur 1** den schematischen Systemaufbau eines neuen erfindungsgemäßen Lufteinperlsystems für die Grundwassermessung zeigt;
**Figur 2** ein Diagramm zur Verdeutlichung der Meßgenauigkeit ist und
**Figur 3** eine schematische Darstellung einer Ausführungsform gemäß der Erfindung während des Meßbetriebes in einem Grundwasserpegelrohr zeigt.

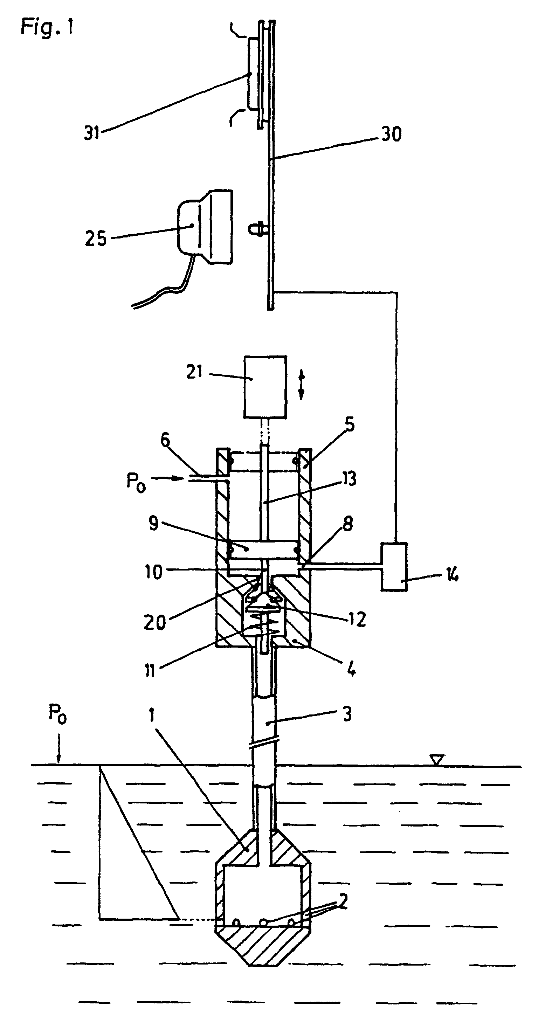

Figur 1 zeigt einen unterhalb des niedrigst zu messenden Wasserstandes befindlichen Ausperltopf 1. Über den Umfang des Ausperltopfs 1 sind in regelmäßigen Abständen zueinander Ausperlöffnungen 2 angebracht. Der Ausperltopf 2 selbst ist über eine Meßleitung 3 mit einer Kolbenpumpe 4 verbunden.

Wichtig ist, daß die Querschnittsfläche des Ausperltopfs 1 um ein Vielfaches größer als die Querschnittsfläche der Meßleitung 3 ist. Das Verhältnis β gleich Querschnittsfläche-Ausperltopf zu Querschnittsfläche-Meßleitung sollte beispielsweise größer 400 sein.

Die Kolbenpumpe 4 besteht aus einem Kolben 9, an dem ein Stift 10 befestigt ist und einem Zylindermantel 5, in welchem sich zwei Bohrungen 6 und 8 befinden. Im unteren Teil des Kolbens 4 befindet sich ein ventilartig ausgebildeter Mechanismus, bestehend aus einer Rückstellfeder 11 und einem Schließkegel 12. Die Auf- und Abbewegung des Kolbens 9 erfolgt über eine Kolbenstange (Trapezgewindestange) 13, welche mit einem Elektromotor 21 verbunden ist.

Bei der oberen Kolbenstellung gelangt Luft über die Bohrung 6 in den Zylinderraum. Der Druck im Inneren des Zylinders entspricht genau dem atmosphärischen Druck. In dieser Konstellation wird mit einer Absolutdruckmeßzelle 14 der atmosphärishe Druck gemessen. Die Absolutdruckmeßzelle 14 ist an die Bohrung 8 angeschlossen und steht somit mit dem atmosphärischen Druck im Zylinderraum in Kontakt.

Wird nun der Kolben 9 nach unten verfahren, so erfolgt eine Verdichtung des eingeschlossenen Luftvolumens im Zylinderraum auf z.B. ca. 2 bar. Bei Erreichen der etwa 2 bar drückt der Stift 10 auf den Schließkegel 12 und öffnet den Auslaß 20. Die Luft strömt in die Meßleitung 3 schlagartig ein. Der Pumpvorgang wird solange wiederholt, bis das eventuell eingedrungene Wasser im Ausperltopf 1 herausgedrückt ist. Das plötzliche Einblasen der Luft in die Meßleitung hat zusätzlich den großen Vorteil, daß eventuelle Wassertröpfchen in der Meßleitung 3 hinausgedrückt werden.

Zur Steuerung der Umkehrbewegung des Kolbens 9 werden die gemessenen Druckabfallflanken (unterste Stellung) des maximalen Kolbendrucks und der Wert des atmosphärischen Druckes (oberste Stellung) benützt.

Die Zeit, in der der Kolben 9 verfahren wird, hängt von der Wasserstandsänderung (Anstieg) sowie dem gewünschten Meßintervall ab.

Bei der Messung des Druckes in der Meßleitung befindet sich der Kolben 9 in seiner untersten Stellung. Der Druck in der Meßleitung 3 wird somit auf die Absolutdruckmeßzelle 14 geführt.

Die Messung des Druckes in der Meßleitung und des atmosphärischen Drucks ist notwendig, da eine Absolutdruckmeßsonde keine automatische Kompensation des atmosphärischen Druckes ermöglicht. Die Ermittlung des hydrostatischen Wasserdrucks erfolgt auf der Sammel- und Auswerteelektronik.

Die gewählte Anordnung, Kolbenpumpe mit Ventilfunktion in Verbindung mit Absolutdruckmeßzelle gewährleistet jedoch eine hochgenaue und langzeitstabile Messung. Die Anordnung ist gänzlich unempfindlich gegen Feuchtigkeit. Ein weiterer Vorteil der gewählten Anordnung besteht darin, daß selbst bei einer Nullpunktsdrift der Absolutdruckmeßzelle die Meßgenauigkeit sich dadurch nicht verschlechtert.

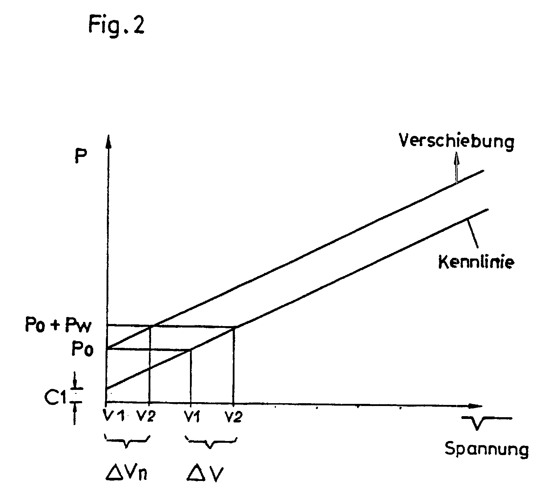

Der Sachverhalt ist in der Skizze (Fig. 2) dargestellt. Die Kennlinie einer Druckmeßzelle stellt eine Beziehung zwischen der gesuchten Meßgröße (Eingangsgröße) und dem erhaltenen Ausgangssignal her. Die Kennlinie liegt in der Form y = a + bx vor. Bei der Messung mit der Anordnung wird gemessen po und po + pw. Die Ermittlung des hydrostatischen Wasserdruckes erfolgt dann über das Δ V = V2 - V1. Tritt nun eine Verschiebung der Kennlinie (Nullpunktsverschiebung) auf, so bewirkt dies keinen Fehler bei der Messung. Das Δ V = V2 - V1 ist weiterhin dasselbe.

Der von Drucksonden gemessene Druck ist das Produkt der Wassersäule und der Dichte des Wassers zuzüglich dem auf das Wasser einwirkenden atmosphärischen Druck. Um den Einfluß des Luftdruckes auszuschalten, werden bei den bekannten Geräten Drucksonden mit Differenzdruckmessung eingesetzt. Hierzu wird über einen dünnen Schlauch der atmosphärische Luftdruck auf die Rückseite der Sondenmembrane geführt. Zu Tropfen kondensierte Feuchtigkeit in diesem Luftschlauch kann die Luftübertragung behindern und somit zu Meßfehlern führen.

Die gemessenen Werte (Druck in der Meßleitung und atmosphärischer Druck) werden auf eine Sammel- und Auswerteelektronik 30 geführt. Für die Anzeige der Meßwerte vor Ort befindet sich auf der Sammel- und Auswerteelektronik 30 ein Display 31. Über eine Optische-Schnittstelle (Infrarot) 25, welche ebenfalls mit der Sammel- und Auswerteelektronik verbunden ist, werden die gesammelten Daten bei Bedarf aus dem Speicher der Sammel- und Auswerteelektronik ausgelesen.

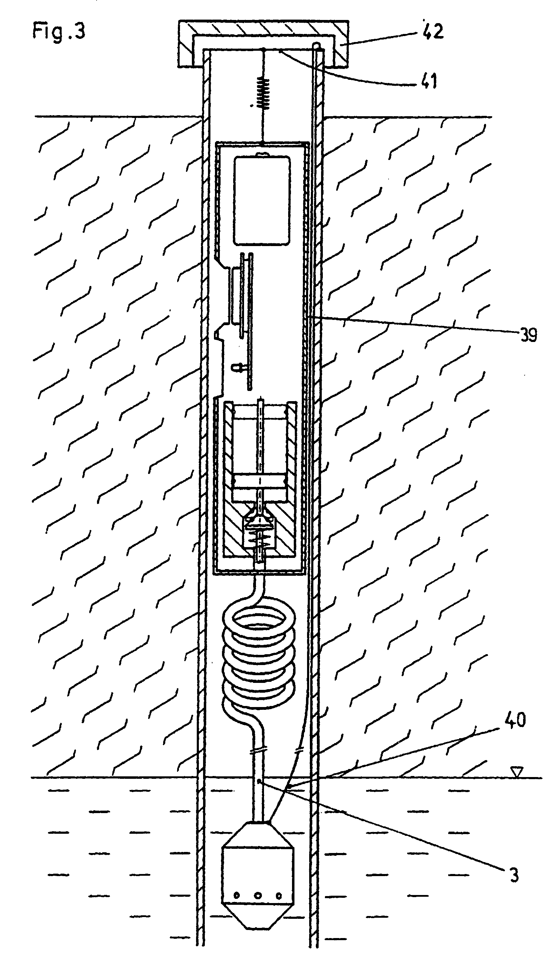

Anhand Fig. 3 können weitere Vorzüge des Meßsystems 39 aufgezeigt werden. Zum Auslesen bzw. Batteriewechsel muß das Meßsystem aus dem Rohr heraus genommen werden. Die Position des Ausperltopfes 1 darf sich dabei jedoch nicht verändern. Dies wird dadurch erreicht, daß der Ausperltopf 1 an einem dünnen Draht 40 befestigt ist, welcher nach oben geführt an einer speziellen Haltevorrichtung 41 unterhalb der Pegelverschlußkappe 42 befestigt ist. Da das Meßsystem 39 ebenfalls über die Meßleitung 3 mit dem Ausperltopf 1 verbunden ist, wird der obere Teil der Meßleitung spiralförmig ausgeführt. Bei Herausnahme des Meßsystems ist so eine zusätzliche Längendehnung der Meßleitung 3 von mehreren Metern möglich, ohne daß dadurch die Lage des Ausperltopfes 1 verändert wird.

Das Meßsystem selbst ist über ein elastisches Kabel ebenfalls an der Haltevorrichtung 41 befestigt. Das elastische Kabel beugt einer Beschädigung des Meßsystems durch Fallbelastung vor.

## Patentansprüche

1. Messgerät zum Messen des hydrostatischen Drucks mit Datensammler, Messwertaufnehmer sowie einer Wirkverbindung zwischen Messwertaufnehmer und Datensammler, **gekennzeichnet durch** eine **durch** einen Motor (21) angetriebenen Kolbenpumpe (4) für das Einperlen von Luft mit einem damit verbundenen Ventil (12) zum Öffnen und Schließen der Messleitung (3) sowie zur gleichzeitigen Steuerung des Messleitungsdrucks im Verhältnis zum Atmosphärendruck, wobei eine Absolutdruckzelle (14) **durch** Betätigung der Kolbenpumpe (4) bei offenem Ventil (12) den Druck eines Grundwassermessgeräts (1; 2) misst und bei geschlossenem Ventil (12) den Atmosphärendruck misst.

2. Messgerät zur Messung des hydrostatischen Drucks nach Anspruch 1, **dadurch gekennzeichnet, dass** ein Zylinder (5) die Kolbenpumpe (4) über eine Bohrung (6) für den Atmosphärendruck, eine Bohrung (8) zur Absolutdruckmesszelle sowie stirnseitig über einen Auslass (20) für einen einen Ventilmechanismus (11, 12) betätigenden, am Kolben festen Stift (10) verfügt.

3. Messgerät nach Anspruch 2, **dadurch gekennzeichnet, dass** Anschlüsse für Atmosphärendruck (6) und einen Drucksensor (8) im Zylinder (5) der Kolbenpumpe (5; 9) münden.

4. Messgerät nach einem der Ansprüche 1 bis 6, **dadurch gekennzeichnet, dass** Datensammler, Kolbenpumpe (4), Absolutdruckmesszelle (14) und eine optische Schnittstelle (25) in einem Zweizollpegelrohr (Fig. 3) vollständig untergebracht sind.

5. Messgerät nach einem der vorhergehenden Ansprüche, **dadurch gekennzeichnet, dass** eine Datenübertragungsschnittstelle als optische Schnittstelle (25), insbesondere als Infrarotschnittstelle, ausgebildet ist.

6. Messgerät nach einem der vorhergehenden Ansprüche, **dadurch gekennzeichnet, dass** der Datensammler flexibel, beispielsweise über ein geringeltes Kabel (z.B. Fig. 3), mit dem Luftausperltopf (1) verbunden ist, der seinerseits über ein Zugkabel (40) oder dergleichen über Einhängelager des Datensammlers und eines Kompressors (Kolbenpumpe) abgehängt ist.

7. Verfahren zum Messen des hydrostatischen Drucks unter Verwendung eines Messgeräts nach einem der Ansprüche 1 bis 6, wobei Luft in das Wasser eingeperlt wird, der Messleitungsdruck auf eine Absolutdruckzelle gegeben und dann der Atmosphärendruck auf die gleiche Seite der Messzelle aufgebracht wird, wobei zur Messung des hydrostatischen Drucks des Grundwassers die Luft in das Grundwasser eingeperlt wird und eine Messleitung mit kleinem Durchmesser gegen eine große Querschnittsfläche eines Ausperltopfs ausbläst, wobei das Verhältnis des Querschnitts des Ausperltopfes zum Querschnitt der Messleitung größer als 400 ist.

8. Verfahren nach Anspruch 7, **dadurch gekennzeichnet, dass** eine Druckabfallflanke eines maximalen Kolbendrucks ein Getriebe zur Umkehrbewegung eines Kolbens steuert.

9. Verfahren nach einem der Ansprüche 7-8, **dadurch gekennzeichnet, dass** ein nach dem Einperlprinzip arbeitender Datensammler, eine Kolbenpumpe, eine Absolutdruckmesszelle und eine optische Schnittstelle in ein Zweizollperlrohr zusammen mit einer Stromversorgung (Batterie) eingeschoben werden.

## Claims

1. Measuring device for measuring hydrostatic pressure with a data collector, measured value sensor and an operative connection between measured value sensor and data collector, **characterized by** a piston pump (4) driven by a motor (21) for bubbling in air and having a valve (12) connected thereto to open and close the measuring line (3) and for the simultaneous control of the measuring line pressure in relation to the atmospheric pressure, an absolute pressure cell (14) measuring the pressure from a groundwater measuring device (1; 2) by actuating the piston pump (4) when the valve (12) is opened, and measuring the atmospheric pressure when the valve (12) is closed.

2. Measuring device for measuring hydrostatic pressure according to Claim 1, **characterized in that** a cylinder (5) of the piston pump (4) has a bore (6) for the atmospheric pressure, a bore (8) to the absolute pressure measuring cell and, at the end, an outlet (20) for a pin (10) which is fixed to the piston and actuates a valve mechanism (11, 12).

3. Measuring device according to Claim 2, **characterized in that** connections for atmospheric pressure (6) and a pressure sensor (8) open in the cylinder (5) of the piston pump (5; 9).

4. Measuring device according to one of Claims 1 to 3, **characterized in that** the data collector, piston pump (4), absolute pressure measuring cell (14) and an optical interface (25) are accommodated completely in a two-inch level tube (Fig. 3).

5. Measuring device according to one of the preceding claims, **characterized in that** a data transmission interface is formed as an optical interface (25), in particular as an infrared interface.

6. Measuring device according to one of the preceding claims, **characterized in that** the data collector is connected flexibly, for example via a twisted cable (e.g. Fig. 3), to the air bubble head (1), which is in turn suspended via a tension cable (40) or the like over suspension bearings of the data collector and a compressor (piston pump).

7. Method of measuring hydrostatic pressure by using a measuring device according to one of Claims 1 to 6, air being bubbled into the water, the measuring line pressure being passed to an absolute pressure cell and then the atmospheric pressure being applied to the same side of the measuring cell, the air being bubbled into the groundwater in order to measure the hydrostatic pressure of the groundwater, and a measuring line of small diameter blowing out against a large cross-sectional area of a bubble head, the ratio of the cross section of the bubble head to the cross section of the measuring line being greater than 400.

8. Method according to Claim 7, **characterized in that** a pressure drop edge of a maximum piston pressure controls a mechanism to reverse the movement of a piston.

9. Method according to one of Claims 7 - 8, **characterized in that** a data collector operating on a the bubble principle, a piston pump, an absolute pressure measuring cell and an optical interface, together with a power supply (battery) are inserted into a two-inch bubble tube.

## Revendications

1. Dispositif de mesure de la pression hydrostatique avec collecteur de données, transducteur ainsi qu'un raccordement effectif entre le transducteur et le collecteur de données, **caractérisé par** une pompe à piston (4) actionnée par un moteur (21) pour le bullage d'air avec une soupape (12) reliée à ladite pompe et servant à l'ouverture et la fermeture de la ligne de mesure (3) ainsi qu'au contrôle synchrone de la pression de la ligne de mesure par rapport à la pression atmosphérique, une cellule de pression absolue (14) mesurant, par actionnement de la pompe à piston (4), la pression d'un dispositif de mesure de nappe phréatique (1 ; 2) lorsque la soupape (12) est ouverte et la pression atmosphérique lorsque la soupape (12) est fermée.

2. Dispositif de mesure de la pression hydrostatique selon la revendication 1, **caractérisé en ce qu'**un cylindre (5) de la pompe à piston (4) dispose d'un alésage (6) pour la pression atmosphérique, d'un alésage (8) pour la cellule de mesure de la pression absolue ainsi que, du côté frontal, d'une sortie (20) pour une tige (10) fixée sur le piston actionnant un mécanisme de soupape (11, 12).

3. Dispositif de mesure selon la revendication 2, **caractérisé en ce que** des raccordements pour la pression atmosphérique (6) et pour un capteur de pression (8) débouchent sur le cylindre (5) de la pompe à piston (5 ; 9).

4. Dispositif de mesure selon l'une quelconque des revendications 1 à 3, **caractérisé en ce que** le collecteur de données, la pompe à piston (4), la cellule de mesure de la pression absolue (14) et une interface optique (25) sont placés entièrement dans un tuyau de niveau de deux pouces (figure 3).

5. Dispositif de mesure selon l'une quelconque des revendications précédentes, **caractérisé en ce qu'**une interface de transmission de données est formée sous forme d'interface optique (25), en particulier sous forme d'interface infrarouge.

6. Dispositif de mesure selon l'une quelconque des revendications précédentes, **caractérisé en ce que** le collecteur de données est relié de manière flexible, par exemple par un câble enroulé en spirale (par exemple figure 3) au pot d'injection de bulles d'air (1) qui, de son côté, est détaché par un câble de traction (40) ou pareillement par un support d'accrochage du collecteur de données et d'un compresseur (pompe à piston).

7. Procédé de mesure de la pression hydrostatique en utilisant un dispositif de mesure selon l'une quelconque des revendications 1 à 6, des bulles d'air étant injectées dans l'eau, la pression du circuit de mesure étant donnée sur une cellule de pression absolue, puis la pression atmosphérique étant appliquée sur le même côté de la cellule de mesure, des bulles d'air étant injectées dans la nappe phréatique pour mesurer la pression hydrostatique de ladite nappe phréatique et une ligne de mesure avec un petit diamètre soufflant contre une grande surface de la section transversale d'un pot d'injection de bulles d'air, le rapport de la section transversale du pot d'injection de bulles d'air par rapport à la section transversale de la ligne de mesure étant supérieur à 400.

8. Procédé selon la revendication 7, **caractérisé en ce qu'**un flanc descendant de pression d'une pression de piston maximale commande un mécanisme pour inverser le sens de marche d'un piston.

9. Procédé selon l'une quelconque des revendications 7 à 8, **caractérisé en ce qu'**un collecteur de données travaillant selon le principe de bullage, une pompe à piston, une cellule de mesure de la pression absolue et une interface optique sont insérés dans un tuyau de bulle de deux pouces conjointement avec une alimentation en courant (batterie).
